# EUROPÄISCHE PATENTSCHRIFT

(11) **EP 3 571 474 B1**
(45) Veröffentlichungstag und Bekanntmachung des Hinweises auf die Patenterteilung: **09.09.2020**
(21) Anmeldenummer: 17803889.9
(22) Anmeldetag: 20.11.2017
(51) Int. Cl.: G01D 5/245, G01D 5/249

(54) **GEBERRADANORDNUNG UND VERFAHREN ZUM ERMITTELN EINER ABSOLUTWINKELPOSITION UND EINER DREHRICHTUNG**
ENCODER WHEEL ASSEMBLY AND METHOD FOR ASCERTAINING AN ABSOLUTE ANGULAR POSITION AND A ROTATIONAL DIRECTION
DISPOSITIF DE ROUE DE DÉTECTION ET PROCÉDÉ DE DÉTERMINATION D'UNE POSITION ANGULAIRE ABSOLUE ET D'UN SENS DE ROTATION

(30) Priorität: 23.01.2017 DE 102017200988
(43) Veröffentlichungstag der Anmeldung: 27.11.2019
(73) Patentinhaber: Robert Bosch GmbH, 70442 Stuttgart (DE)
(72) Erfinder: MERKEL, Tino, 71701 Schwieberdingen (DE); UTERMOEHLEN, Fabian, 71229 Leonberg (DE); ECKERT, Bernd, 71665 Vaihingen An Der Enz (DE); HANEL, Stephan, 71706 Markgroeningen (DE); MAUR, Marcel, 71679 Asperg (DE); LETZGUS, Matthias, 74749 Rosenberg (DE)
(86) Internationale Anmeldenummer: PCT/EP2017/079773
(87) Internationale Veröffentlichungsnummer: WO 2018/133978

(56) Entgegenhaltungen:
- EP-A2- 1 369 339
- EP-A2- 1 510 787
- DE-A1-102004 063 415
- US-A1- 2014 184 030

## Beschreibung

Die vorliegende Erfindung betrifft eine Geberradanordnung und ein Verfahren zum Ermitteln einer Absolutwinkelposition und einer Drehrichtung, insbesondere einer elektrischen Maschine (Elektromotor) mittels einer asymmetrischen Winkelverdrehung von Zähnen zweier Geberräder zueinander.

### Stand der Technik

Für die Realisierung einer Traktion in Elektrofahrzeugen (EVs) sind elektrische Maschinen (Elektromotoren) im Fokus der momentanen Entwicklung. Im Wesentlichen werden Asynchronmaschinen oder Synchronmaschinen für die Realisierung der Traktion in EVs verwendet. Beide Arten von Maschinen weisen einen ortsfesten Stator und einen sich drehenden Rotor auf. Der Stator trägt in der Regel drei zueinander versetzte Wicklungsstränge, wobei diese insbesondere um einen Winkel von 120° [Grad] / p versetzt sind und p eine Anzahl an Polpaaren der Maschine repräsentiert. Im Fall einer Asynchronmaschine (ASM) besteht der Rotor aus elektrisch leitfähigen Stäben, die an den Enden ringförmig kurzgeschlossen sind. Dreht sich nun ein Rotorfeld des Rotors, wird in diesen Stäben eine Spannung induziert, die einen Stromfluss hervorruft. Der Stromfluss baut wiederum ein Gegenmagnetfeld auf, sodass es zu einer rotatorischen Bewegung kommt. Da die induzierte Spannung Null wird, wenn das Rotorfeld und der Stator gleich schnell drehen, stellt sich immer eine Drehzahldifferenz ein, die als Schlupf bezeichnet wird und die sich direkt auf ein Drehmoment der Maschine auswirkt.

Bei der Synchronmaschine besteht der Rotor aus einem Läufer, der eine Erregerspule trägt. In der Erregerspule fließt ein Gleichstrom, welcher ein statisches Magnetfeld erzeugt. Alternativ dazu kann auch ein Permanentmagnet als Rotor verwendet werden. Es handelt sich dann um eine permanent erregte Synchronmaschine (PSM), die aufgrund einer leistungslosen Erregung einen höheren Wirkungsgrad hat und demnach für Traktionsanwendungen geeigneter ist. Die Drehzahl des Rotors ist prinzipbedingt identisch zur Drehzahl des Erregerfeldes. Das Drehmoment hängt von einem Phasenversatz ab. Der Phasenversatz ist die Winkeldifferenz zwischen dem Statorfeld und dem Rotor.

Zur Ansteuerung einer Leistungselektronik und einer entsprechenden Bereitstellung der Statorspulensignale, muss im Fall der ASM die Drehzahl des Rotors und im Fall der PSM die Absolutwinkelposition des Rotors bekannt sein. In beiden Fällen ist unter anderem aus Gründen der funktionalen Sicherheit zusätzlich die Drehrichtung des Rotors zu bestimmen.

Um diese Größen zu ermitteln, wird häufig ein Resolver verwendet. Bei diesem handelt es sich um einen elektromagnetischen Messumformer, bei dem ein Rotorpaket drehfest auf einer Welle der Maschine montiert ist. Zudem sind kreisringförmig umlaufend auf dem Stator eine Erregerspule sowie zwei Empfangsspulen montiert. Die Erregerspule wird mit einem Wechselspannungssignal im Bereich von einigen zehn kHz [Kilohertz] (Frequenz bevorzugt 10 - 80 kHz) beaufschlagt und durchsetzt die gesamte Anordnung mit einem Wechselfeld. Absolutwinkelpositionsabhängig wird nun in der ersten Empfangsspule eine sinusförmig amplitudenmodulierte Spannung induziert, während in der zweiten Empfangsspule eine cosinusförmig amplitudenmodulierte Spannung induziert wird. Dabei benötigt der Resolver relativ viel Bauraum, zieht eine komplexe Signalbereitstellung sowie -aufbereitung nach sich und muss mit sehr geringen mechanischen Toleranzen montiert werden. Ferner ist im Falle eines Defekts ein Austausch nur mit erheblichem Aufwand möglich, da nahezu die komplette Maschine zerlegt werden muss. Neben elektromagnetischen Resolvern gibt es auch optische Resolver (z. B. gemäß DE 10 2013 203937), die neben hohen Kosten eine erhebliche Querempfindlichkeit gegenüber Verschmutzung aufweisen und demzufolge nicht in jedem Umfeld einsetzbar sind.

Alternativ können induktive Absolutwinkelsensoren verwendet werden. Es sind im Wesentlichen zwei Sensorprinzipien bekannt: Ein erstes Sensorprinzip basiert auf dem Wirbelstromeffekt. Hierbei wird ein metallisches Target über Sensorspulen bewegt, die mit Wechselspannung beaufschlagt werden und in dem Target einen Wirbelstrom induzieren. Dies führt zu einer Reduzierung von Spuleninduktivitäten und ermöglicht über eine Verschaltung in einem Schwingkreis basierend auf einer Frequenzänderung auf den Drehwinkel zu schließen. Nachteilig ist dabei eine hohe Querempfindlichkeit gegenüber mechanischen Einbautoleranzen (vor allem Verkippung des Targets) sowie ein mögliches Locking der Frequenzen auf Störungen von außen (Injection Locking), da üblicherweise Frequenzen im Bereich von einigen zehn MHz [Megahertz] (bevorzugt 20 - 50 MHz) verwendet werden. Das andere Sensorprinzip basiert auf gekoppelten Spulen (z. B. gemäß EP 0 909 955 B1). Dieser Typ von Sensor ist dadurch gekennzeichnet, dass in einer einzigen Erregerspule ein elektromagnetisches Wechselfeld erzeugt wird, welches in mehrere Empfangsspulen koppelt und dort jeweils eine Spannung induziert. Für die Messung der Absolutwinkelposition wird ein drehbar gelagertes, leitfähiges Target benötigt, welches in Abhängigkeit seiner Winkelstellung (relativ zu den Spulen) eine induktive Kopplung zwischen der Erregerspule und den Empfangsspulen beeinflusst. Nachteilig sind dabei ein Schaltungsaufwand zur Bereitstellung von Signalen sowie eine fehlende Echtzeitfähigkeit einer Signalverarbeitung. Speziell bei hohen Drehzahlen sind bekannte digitale Schnittstellen (z. B. SENT) zu langsam, um ausreichend oft eine Winkelinformation zu liefern.

Zur Drehzahl- und daraus abgeleiteten Absolutwinkelpositionsmessung in Verbrennungsmaschinen (VKM) sind Phasengeber und Drehzahlgeber bekannt (z. B. gemäß DE 4011503 A1). Hierbei kann es sich sensorseitig z. B. um Hallelemente handeln, die auf einem Backbias-Magnet angebracht sind. Dreht sich an den Hallelementen ein ferromagnetisches Zahnrad (Target) vorbei, führt dies zu einer Änderung der Hallspannung, da sich ein Magnetkreis verändert. Ein Hallsignal wird vorteilhaft durch eine Komparatorschaltung oder einen Schmitt-Trigger in ein digitales Signal überführt, welches echtzeitfähig z. B. die Zündung der VKM auslösen kann. Um mit derartigen Sensoren Absolutwinkelpositionen messen zu können, werden üblicherweise drei Sensoren eingesetzt, die um 120° elektrisch zueinander versetzt angeordnet sind. Dies erfordert neben hohen Sensorkosten eine aufwendige Montage, die aus Platzgründen nicht immer realisierbar ist.

Die EP1369339 offenbart einen Drehwinkelgeber.

### Offenbarung der Erfindung

Hier beschrieben werden ein Verfahren zur Bereitstellung einer Absolutwinkelposition und einer Drehrichtung eines Rotors mit digitalen Ausgangssignalen und eine entsprechende Geberanordnung. Dazu werden ein Verfahren gemäß dem unabhängigen Anspruch 1, eine Geberradanordnung, ein Computerprogramm und ein Speichermedium gemäß der weiteren unabhängigen Ansprüche vorgeschlagen. Weitere vorteilhafte Ausführungsformen des Verfahrens und der Geberanordnung sind Gegenstand der jeweiligen Unteransprüche. Die in den Ansprüchen einzeln aufgeführten Merkmale sind in beliebiger, technologisch sinnvoller Weise miteinander kombinierbar und können durch erläuternde Sachverhalte aus der nachfolgenden Beschreibung ergänzt werden, ohne den Umfang der Offenbarung dabei zu verlassen.

Hier insbesondere beschrieben wird eine Geberradanordnung zum Ermitteln einer Absolutwinkelposition und einer Drehrichtung eines Rotors. Die Geberradanordnung umfasst ein erstes Geberrad, das drehfest mit dem Rotor verbunden ist. Dabei weist das erste Geberrad entlang seines Umfangs eine Anzahl n an gleichmäßig beabstandet angeordneten Zähnen auf. Weiterhin umfasst die Geberradanordnung ein zweites Geberrad, das drehfest mit dem ersten Geberrad verbunden ist. Dabei weist das zweite Geberrad entlang seines Umfangs die gleiche Anzahl n an Zähnen wie das erste Geberrad auf. Die Zähne des zweiten Geberrads weisen dabei einen asymmetrischen Winkelversatz zu den Zähnen des ersten Geberrads auf. Ferner umfasst die Geberradanordnung einen ersten Sensor, der zu einem Abtasten des ersten Geberrads eingerichtet ist und einen zweiten Sensor, der zu einem Abtasten des zweiten Geberrads eingerichtet ist. Zudem umfasst die Geberradanordnung eine Steuerung, die mit dem ersten Sensor und dem zweiten Sensor kommunikativ verbunden ist. Dabei ist die Steuerung zu einem Ermitteln der Absolutwinkelposition sowie einem Ermitteln der Drehrichtung basierend auf einem binären Signal eingerichtet. Das binäre Signal ist dabei aus einem ersten Signal des ersten Sensors und einem zweiten Signal des zweiten Sensors abgeleitet.

Die Geberradanordnung ist insbesondere zum Ermitteln der Absolutwinkelposition und Drehrichtung eines Rotors einer elektrischen Maschine (Elektromotor) geeignet.

Das erste Geberrad und das zweite Geberrad drehen sich mit der gleichen Winkelgeschwindigkeit wie der Rotor. Die Geberräder können bevorzugt gleiche axiale Abmessungen (Breite B) und gleiche Durchmesser D aufweisen. Der Durchmesser D kann bevorzugt im Bereich zwischen wenigen zehn Millimetern bis zu mehreren hundert Millimetern und besonders bevorzugt zwischen etwa 50 mm [Millimeter] bis 350 mm liegen. Die Breite B jedes Einzelgeberrades kann bevorzugt im zwischen etwa 5 mm bis 20 mm liegen und besonders bevorzugt 8 mm betragen.

Die Zähne des zweiten Geberrads weisen im Gegensatz zu den regelmäßig angeordneten Zähnen des ersten Geberrads jeweils einen asymmetrischen Winkelversatz V zu den Zähnen des ersten Geberrads auf. Der Winkelversatz V eines jeden Zahns des zweiten Geberrads zu dem jeweils entsprechenden Zahn des ersten Geberrads ist entweder positiv oder negativ. Zudem kann bevorzugt jeder Winkelversatz V betragsmäßig gleich sein. Ein Winkelversatz V zwischen den Zähnen auf dem ersten Geberrad und den entsprechenden Zähnen auf dem zweiten Geberrad kann betragsmäßig konstant sein und bevorzugt betragsmäßig zwischen 20% [Prozent] und 50% und besonders bevorzugt betragsmäßig 30% einer Länge L der Zähne betragen. Somit liegt jeder Zahn des zweiten Geberrads entweder mit positivem Versatz vor dem entsprechenden Zahn des ersten Geberrads oder mit negativem Versatz nach dem entsprechenden Zahn des ersten Geberrads. Die Winkelversätze aller Zahnpaare der Zähne des ersten Geberrads mit den entsprechenden Zähnen des zweiten Geberrads ergeben eine Abfolge von Versätzen, mithin eine Kodierung. Die Zähne können hier sowohl Vorsprünge mit dazwischenliegenden Vertiefungen sein, aber auch sonstige Markierungen (Farben, Dotierungen (magnetisch, radioaktiv, ...), etc.), die eine Unterscheidung zwischen Zahn und Lücke ermöglichen. Prinzipiell sollte die Anzahl n an Zähnen (und Lücken) maximiert werden, um eine hohe Winkelpositionsauflösung der Geberradanordnung zu gewährleisten. Bevorzugt kann die Anzahl an Zähnen n ≥ 8p betragen, wobei p die Anzahl an Polpaaren der elektrischen Maschine ist, um eine robuste und ausreichend genaue Kommutierung zu ermöglichen. Eine Länge L eines Zahns und eine Länge S einer Lücke sind dadurch nach unten begrenzt, dass der (magnetische) Kontrast (z. B. Hallspannungsdifferenz bei Hallsensoren) beim Passieren eines Zahnes bzw. einer Lücke ausreichend groß sein muss. Bevorzugt kann eine Länge S einer Lücke des ersten Geberrads ungefähr 10% größer sein als die Länge L eines Zahnes und weiter bevorzugt zwischen ungefähr 2 mm bis 5 mm, besonders bevorzugt 3,5 mm betragen. Die Höhe H eines Zahnes ist nach oben nicht begrenzt und muss nur ausreichend sein, damit ein Zahn von einer Lücke unterschieden werden kann.

Der erste Sensor und der zweite Sensor müssen die Zähne auf den Geberrädern von dazwischenliegenden Lücken unterscheiden können. Insbesondere können als Sensoren Magnetfeldsensoren, Riesenmagnetowiederstand-(Giant Magnetoresistance(GMR)-)Sensoren, Magnetischer-Tunnelwiederstand-(Tunnel Magnetoresistance(TMR)-)Sensoren, induktive, passive Sensoren (Spule mit Permanentmagnet) oder dergleichen in Kombination mit magnetischen Zähnen verwendet werden. Aber auch optische Sensoren oder Ultraschallsensoren, die Zähne und Lücken (z. B. über Höhenunterschiede) auf einem Geberrad erkennen können, sind vorliegend als Sensoren geeignet. Das erste Signal des ersten Sensors und das zweite Signal des zweiten Sensors können bevorzugt mittels Analog-Digital-Wandlung in jeweils ein digitales Signal umgewandelt werden. Vorteilhaft können das erste Signal und das zweite Signal durch eine Komparatorschaltung oder einen Schmitt-Trigger in jeweils ein digitales Signal überführt werden. Die Umwandlung in ein digitales Signal kann im ersten und zweiten Sensor oder in der Steuerung erfolgen.

Die Steuerung ist mit den Sensoren kommunikativ verbunden und verarbeitet deren Signale, um daraus die Absolutwinkelposition und die Drehrichtung zu ermitteln. Die Steuerung kann eine integrierte Schaltung sein. Eine integrierte Schaltung kann ein Mikrokontroller (µC) oder eine anwendungsspezifische integrierte Schaltung (application-specific-integrated ciruit, ASIC) oder ein anwendungsspezifisches Standardprodukt (application specific standard product, ASSP) oder eine im Feld programmierbare Logik-Gatter-Anordnung (field programmable gate array, FPGA) oder dergleichen sein. Eine integrierte Schaltung kann einen flüchtigen oder einen nicht-flüchtigen Speicher umfassen. Der flüchtige Speicher kann ein Speicher mit wahlfreiem/direktem Zugriff (Random Access Memory, RAM) sein. Der nicht-flüchtige Speicher kann ein Sekundärspeicher wie z. B. eine Festplatte, eine CD, eine DVD, eine Diskette oder ein Halbleiterspeicher (z. B. EPROM oder Flash-Speicher oder dergleichen) sein. Zudem kann die Steuerung in ein Steuergerät der elektrischen Maschine integriert sein.

Durch Messung des Winkelversatzes von jeweils zwei Zähnen, die sich auf zwei unterschiedlichen Geberrädern der Geberradanordnung befinden, kann die Absolutwinkelposition und die Drehrichtung des Rotors ermittelt werden. Der Winkelversatz zweier Zähne wird über eine relative Verdrehung entlang des jeweiligen Umfangs der Geberräder realisiert und dient der Generierung eines binären Wertes (logische 0 oder logische 1). Mit Hilfe einer speziellen Kodierung, basierend auf dem asymmetrischen (wechselnden positiven und negativen) Winkelversatz, lassen sich über eine Mustererkennung die Drehrichtung sowie die Absolutwinkelposition ermitteln. Die entsprechende Geberradanordnung ist dabei so ausgestaltet, dass innerhalb einer ersten elektrischen Umdrehung erkannt werden kann, ob ein Drehmoment in eine falsche Drehrichtung abgegeben wird. Über die Kodierung einer Geberradstruktur mit nachgelagerter Signalauswertung der zwei Sensoren kann ebenfalls die Absolutwinkelposition erkannt werden. Dazu empfängt die Steuerung das erste Signal des ersten Sensors, der die Zähne des ersten Geberrads erkennt, und das zweite Signal des zweiten Sensors, der die Zähne des zweiten Geberrads erkennt. Aus dem ersten Signal und dem zweiten Signal wird das binäre Signal abgeleitet. Die Ableitung des binären Signals kann bevorzugt durch Differenzbildung aus dem ersten Signal und dem zweiten Signal erfolgen, basierend auf dem jeweils positiven oder negativen Winkelversatz der Zähne des zweiten Geberrads zu den entsprechenden Zähnen des ersten Geberrads. Das binäre Signal kann einer logischen 1, wenn ein Zahn des zweiten Geberrads vor einem entsprechenden Zahn des erstes Geberrads detektiert wird, und einer logischen 0, wenn ein Zahn des zweiten Geberrads nach einem entsprechenden Zahn des erstes Geberrads detektiert wird, entsprechen oder umgekehrt. Das binäre Signal kann direkt von der Steuerung über eine Phasenmessung der beiden Signale der Sensoren abgeleitet werden. Daher ergibt sich für jedes Zahnpaar, bestehend aus einem Zahn des ersten Geberrads und einem entsprechenden Zahn des zweiten Geberrades, anhand ihres Winkelversatzes ein binärer Wert, der mittels der beiden Signale der Sensoren ermittelt wird. Somit ergibt sich nach einer elektrischen Umdrehung aus dem binären Signal eine asymmetrische Folge, die die asymmetrische Kodierung widerspiegelt, die auf dem asymmetrischen Winkelversatz der Zähne des zweiten Geberrads zu den Zähnen des ersten Geberrads entspricht. Um die Absolutwinkelposition und die Drehrichtung eindeutig aus dem binären Signal eindeutig erkennen zu können, muss eine spezielle Kodierung und somit eine spezielle Anordnung der Zähne des zweiten Geberrads erfolgen. Es muss ein asymmetrischer Winkelversatz der Zähne des zweiten Geberrads zu den Zähnen des ersten Geberrads vorliegen, sodass eine Drehrichtung im Uhrzeigersinn von einer Drehung gegen den Uhrzeigersinn diskriminiert werden kann. Dazu muss sich eine binäre Folge des binären Signals, die sich bei einer elektrischen Umdrehung ergibt, eindeutig der Drehung im oder gegen den Uhrzeigersinn zuordnen lassen. Dies ist bei folgender asymmetrischer Anordnung der einzelnen Winkelversätze V möglich:
a) Bei einer ungeraden Anzahl n an Zähnen ist jede Anordnung von Winkelversätzen V zulässig, die nicht zu Kodierungen mit ausschließlich identischen Ziffern führt (d.h. nicht ausschließlich positive oder negative Winkelversätze V). Beispielsweise ist 00000 oder 11111 nicht für eine fünfstellige Kodierung zulässig.
b) Bei einer geraden Anzahl n an Zähnen ist jede Anordnung von Winkelversätzen V zulässig, die nicht zu Kodierungen führt, die durch einen Bitshift (nach links oder rechts) in symmetrische Kodierungen überführt werden können. Beispielsweise kann die Kodierung 00001111 durch einen Bitshift um zwei Positionen nach rechts in 11000011 überführt werden, sodass eine Drehrichtung im Uhrzeigersinn nicht von einer Drehrichtung gegen den Uhrzeigersinn unterscheidbar ist.

Bei dem Ermitteln der Absolutwinkelposition wird zunächst ein Startwinkel aus der ersten elektrischen Umdrehung mittels des asymmetrischen Winkelversatzes und der resultierenden Kodierung (Mustererkennung) ermittelt. Anschließend kann die aktuelle Absolutwinkelposition kontinuierlich durch Summation von Inkrementalwinkeln ermittelt werden, die aus dem binären Signal abgeleitet und zu dem Startwinkel bzw. der vorhergehenden Absolutwinkelposition addiert werden. Der kleinstmögliche Inkrementalwinkel, der mit der mit der Geberradanordnung bestimmbar ist, richtet sich dabei nach der Anzahl n der Zähne auf den Geberrädern (z. B. bei n = 8 ist der Inkrementalwinkel 45° (360° / 8)). Sobald das binäre Signal den nächsten Wert (logische 0 oder 1) annimmt, wird der Inkrementalwinkel aufaddiert und die aktuelle Absolutwinkelposition ausgegeben. Bei dem Ermitteln der Drehrichtung erfolgt während einer elektrischen Umdrehung, analog zum Ermitteln des Startwinkels, basierend auf der Kodierung durch den asymmetrischen Winkelversatz eine Analyse des binären Signals (Mustererkennung), woraus sich eindeutig die Drehrichtung ableiten lässt.

Da die verwendeten Sensoren digitale Inkrementalsignale liefern, sind hohe Umdrehungsgeschwindigkeiten möglich. Weiterhin bedarf es keiner komplexen Signalbereitstellung und -nachbereitung. Darüber hinaus erlaubt das beschriebene Messprinzip höhere zulässige mechanische Toleranzen bei der Sensormontage, da es sich um ein sehr robustes Messverfahren handelt. Zudem ist ein besonders einfacher Sensoraufbau möglich, da die zwei Sensoren in einem Gehäuse platziert werden können. Dies führt zu einer Kostenreduktion bei der Montage und bei Reparaturen, da der Sensor radial bezüglich einer Welle platziert werden kann. Insbesondere ermöglicht die Geberradgeometrie eine integre Lagebestimmung gemäß A-SIL D (ISO 26262), da alle Fehler (z. B. fehlender Zahn) innerhalb einer Fehlerlatenzzeit erkannt werden können.

In einer weiteren Ausführungsform sind die Zähne des ersten Geberrads und/oder die Zähne des zweiten Geberrads gleichförmig.

Die Zähne des ersten und des zweiten Geberrads weisen die gleichen geometrischen Dimensionen auf. Bevorzugt kann eine Länge L der Zähne des ersten Geberrads und des zweiten Geberrads ungefähr 2 mm bis 5 mm, besonders bevorzugt 3,2 mm betragen. Die Höhe H der Zähne ist nach oben nicht begrenzt, kann jedoch bevorzugt zwischen ungefähr 2 mm bis 5 mm, besonders bevorzugt 3,2 mm betragen.

Durch die Verwendung von Zähnen mit gleichen Dimensionen wird die Signalauswertung deutlich erleichtert, da die einzelnen Signalblöcke immer eine nahezu konstante Länge aufweisen.

In einer weiteren Ausführungsform umfassen der erste Sensor und der zweite Sensor jeweils wenigstens zwei Sensorelemente. Dabei sind das erste Signal und das zweite Signal jeweils Differenzsignale aus Messsignalen der wenigstens zwei Sensorelemente des entsprechenden Sensors.

Ein Differenzsignal aus zwei Messsignalen von zwei entsprechenden Sensorelementen eines Sensors weist eine logische 1 auf, wenn die Differenz der Messsignale einen vorgegebenen unteren Grenzwert unterschreitet und eine logische 0, wenn die Differenz der Messsignale einen vorgegebenen oberen Grenzwert überschreitet, oder umgekehrt. Somit wird aus den analogen Messsignalen der einzelnen Sensorelemente direkt ein digitales Differenzsignal der einzelnen Sensoren an die Steuerung weitergegeben.

Durch die grenzwertbasierte Differenzsignalbildung liegt direkt ein digitales Signal ohne vorherige Analog-Digital-Wandlung vor. Zudem kann Signalrauschen aufwandsarm aus dem Signal, das an die Steuerung weitegeleitet wird, ferngehalten werden.

In einer weiteren Ausführungsform sind der erste Sensor und der zweite Sensor zu einem Erzeugen von jeweils wenigstens zwei ersten Signalen und wenigstens zwei zweiten Signalen eingerichtet.

Von beiden Sensoren werden jeweils zwei Signale an die Steuerung weitergegeben. Es wird dabei von jedem Sensor das zugehörige Geberrad an mindestens zwei Stellen abgetastet und die Zähne erkannt. Die mindestens zwei resultierenden Messsignale werden an die Steuerung weitergegeben und zuvor entweder im jeweiligen Sensor oder in der Steuerung von analog zu digital gewandelt. Besonders bevorzugt umfasst ein Sensor jeweils mindestens drei Sensorelemente aus deren Messsignalen mindestens zwei Differenzsignale, wie zuvor beschreiben, gebildet werden, wobei diese mindestens zwei Differenzsignale als die Signale des jeweiligen Sensors an die Steuerung weiter gegeben werden. Insbesondere liegt eine redundante Information der Sensoren vor, wenn wie bevorzugt mindestens drei Sensorelemente pro Sensor eingesetzt werden und mindestens zwei Differenzsignale aus den Messsignalen ermittelt werden. Dann ist eine zusätzliche Plausibilisierung durch eine Phasenmessung von jeweils entsprechend zusammengehörigen Differenzsignalen des ersten und des zweiten Sensors möglich.

Durch die Bereitstellung von wenigstens zwei Signalen pro Sensor wird eine Erhöhung der Robustheit erreicht, da somit redundante Informationen mit zusätzlicher Plausibilisierungsmöglichkeit vorhanden sind.

In einer weiteren Ausführungsform ist die Steuerung zu einem Ermitteln der Drehrichtung basierend auf den wenigstens zwei ersten Signalen oder den wenigstens zwei zweiten Signalen eingerichtet.

Eines der wenigstens zwei Signale eines Sensors eilt dem anderen Signal des Sensors nach. Dieses Nacheilen äußert sich in einer Phasenverschiebung. Aus der Phasenverschiebung lässt sich die Drehrichtung des Rotors mit nur einem der beiden Sensoren ermitteln. Das Signal eines Sensors, das aus einem Sensorelement bzw. einer Sensorelementanordnung (Differenzsignal) stammt, das/die in Drehrichtung weiter vorne liegt, eilt einem Signal des Sensors, das aus einem Sensorelement bzw. einer Sensorelementanordnung (Differenzsignal) stammt, das/die in Drehrichtung weiter hinten liegt, voraus. Somit kann aus der Phasenverschiebung zwischen den Signalen eines Sensors auf die Drehrichtung des Rotors geschlossen werden, ohne die Signale des anderen Sensors mit betrachten zu müssen.

Durch die wenigstens zwei Signale eines Sensors, liegen redundante Informationen bezüglich der Drehrichtung vor, sodass eine Plausibilisierung erfolgen kann, was die Robustheit erhöht.

In einer weiteren Ausführungsform ist der erste Sensor und/oder der zweite Sensor ein Magnetfeldsensor, insbesondere ein Hallsensor. Zudem sind entsprechend die Zähne des ersten Geberrads oder die Zähne des zweiten Geberrads ferromagnetisch.

Zieht ein ferromagnetischer Zahn nahe an einem Magnetfeldsensor oder Hallsensor bzw. an dessen Magnetfeldsensorelement(en) oder Hallelement(en) vorbei, ergibt sich eine Induktionsspannung oder Hallspannung durch die Veränderung im magnetischen Fluss gegenüber den Lücken. Dies gilt auch, wenn die Lücken ebenfalls ferromagnetisch sind, aber weiter von dem Magnetfeldsensor/Hallsensor entfernt vorbeiziehen als die Zähne (Höhenunterschied).

Magnetfeldsensoren und insbesondere Hallsensoren bieten in Kombination mit ferromagnetischen Zähnen eine besonders genaue sowie robuste und dennoch kostengünstige Möglichkeit, die Zähne eines Geberrads zu erkennen.

Insbesondere in Fahrzeugen kann mit der zuvor beschriebenen Geberradanordnung die Absolutwinkelposition und die Drehrichtung eines Rotors einer Maschine wie einer elektrischen Maschine (Elektromotor) oder VKM ermittelt werden.

Das beschriebene Verfahren ist ein Verfahren zum Ermitteln einer Absolutwinkelposition und einer Drehrichtung eines Rotors. Das Verfahren umfasst die Schritte:
a) Empfangen eines ersten Signals von einem ersten Sensor, der ein erstes Geberrad abtastet, das drehfest mit dem Rotor verbunden ist, wobei das erste Geberrad entlang seines Umfangs eine Anzahl n an gleichmäßig beabstandet angeordneten Zähnen aufweist;
b) Empfangen eines zweiten Signals von einem zweiten Sensor, der ein zweites Geberrad der Geberradanordnung abtastet, das drehfest mit dem ersten Geberrad verbunden ist, wobei das zweite Geberrad entlang seines Umfangs die gleiche Anzahl n an Zähnen wie das erste Geberrad aufweist, wobei die Zähne des zweiten Geberrads einen asymmetrischen Winkelversatz zu den Zähnen des ersten Geberrads aufweisen;
c) Ableiten eines binären Signals aus dem ersten Signal und dem zweiten Signal;
d) Ermitteln der Absolutwinkelposition basierend auf dem binären Signal; und
e) Ermitteln der Drehrichtung basierend auf dem binären Signal.

Das Verfahren ist insbesondere zum Ermitteln der Absolutwinkelposition und Drehrichtung eines Rotors einer elektrischen Maschine (Elektromotor) geeignet.

Ferner ist das Verfahren insbesondere mit einer Geberradanordnung wie zuvor beschreiben anwendbar.

Das vorliegende Verfahren setzt im Wesentlichen die Funktionalität des bereits zuvor beschriebenen Reglers der Geberradanordnung um, sodass prinzipiell die gleichen technischen Mittel eingesetzt und die gleichen Vorteile erzielt werden können.

Das erste Signal gibt die zeitliche Abfolge der gleichmäßig am ersten Geberrad verteilten Zähne bei Rotation des Rotors an. Das zweite Signal gibt die zeitliche Abfolge der Zähne am zweiten Geberrad mit asymmetrischem Winkelversatz zu den Zähnen des ersten Geberrads an. Aus dem ersten und dem zweiten Signal wird das binäre Signal, bevorzugt durch Differenzbildung, abgeleitet, das eine logische 1 ausgibt, wenn ein Zahn des zweiten Geberrads in Umfangsrichtung vor dem entsprechenden Zahn des ersten Geberrads angeordnet ist, also einen positiven Versatz aufweist, und eine logische 0, wenn ein Zahn des zweiten Geberrads in Umfangsrichtung nach dem entsprechenden Zahn des ersten Geberrads angeordnet ist, also einen negativen Versatz aufweist, oder umgekehrt. Bei einer elektrischen Umdrehung wird eine asymmetrische Folge, die eine asymmetrische Kodierung wiederspiegelt, die dem asymmetrischen Winkelversatz der Zähne des zweiten Geberrads zu den Zähnen des ersten Geberrads entspricht, durch das binäre Signal angegeben. Die Kodierung ist dabei derart asymmetrisch, dass zu jedem Startwinkel eindeutig die Absolutwinkelposition und die Drehrichtung nach einer elektrischen Umdrehung aus dem binären Signal durch eine Mustererkennung ermittelt werden kann. Für die momentane Absolutwinkelposition kann zu Beginn der Rotation ein Startwinkel nach der ersten elektrischen Umdrehung des Rotors aus der ersten asymmetrischen Folge, die das aus dem ersten Signal und aus dem zweiten Signal abgeleitete binäre Signal liefert, durch Mustererkennung ermittelt werden. Anschließend kann kontinuierlich ein Inkrementalwinkel zu dem Startwinkel bzw. der jeweils vorherigen Absolutwinkelposition addiert werden, um die aktuelle Absolutwinkelposition zu ermitteln. Der kleinstmögliche Inkrementalwinkel, der mit der mit dem Verfahren bestimmbar ist, richtet sich dabei nach der Anzahl n der Zähne auf den Geberrädern (z. B. bei n = 8 ist der Inkrementalwinkel 45°). Sobald das binäre Signal den nächsten Wert (logische 0 oder 1) annimmt, wird der Inkrementalwinkel aufaddiert und die aktuelle Absolutwinkelposition ausgegeben. Die Drehrichtung ist direkt aus der asymmetrischen Folge nach einer elektrischen Umdrehung durch Mustererkennung ermittelbar.

Durch die Verarbeitung von Inkrementalsignalen, sind hohe Umdrehungsgeschwindigkeiten möglich und dennoch bedarf es keiner komplexen Signalbereitstellung und -nachbereitung, sodass ein aufwandsarmes sowie kostengünstiges und dennoch robustes und präzises Verfahren bereitgestellt wird.

In einer weiteren Ausführungsform sind das erste Signal und das zweite Signal jeweils Differenzsignale aus Messsignalen von wenigstens zwei Sensorelementen des entsprechenden Sensors.

Ein Differenzsignal aus zwei Messsignalen von zwei entsprechenden Sensorelementen eines Sensors weist eine logische 1 auf, wenn die Differenz der Messsignale einen vorgegebenen unteren Grenzwert unterschreitet und eine logische 0, wenn die Differenz der Messsignale einen vorgegebenen oberen Grenzwert überschreitet, oder umgekehrt. Somit wird aus den analogen Messsignalen der einzelnen Sensorelemente direkt ein digitales Differenzsignal der einzelnen Sensoren an die Steuerung weitergegeben.

Durch die grenzwertbasierte Differenzsignalbildung liegt direkt ein digitales Signal ohne vorherige Analog-Digital-Wandlung vor. Zudem kann Signalrauschen aufwandsarm aus dem Signal, das an die Steuerung weitegeleitet wird, ferngehalten werden.

In einer weiteren Ausführungsform werden in Schritt a) und Schritt b) entsprechend wenigstens zwei erste Signale und wenigstens zwei zweite Signale empfangen.

Es werden jeweils zwei Signale für jedes der beiden Geberräder an die Steuerung weitergegeben. Es wird dabei von jedem Sensor das zugehörige Geberrad an mindestens zwei Stellen abgetastet und die Zähne erkannt. Die mindestens zwei resultierenden Messsignale werden an die Steuerung weitergegeben und zuvor entweder im jeweiligen Sensor oder in der Steuerung von analog zu digital gewandelt. Besonders bevorzugt werden mindestens zwei Differenzsignale, wie zuvor beschreiben, pro Geberrad an die Steuerung übertragen, wobei diese mindestens zwei Differenzsignale als die Signale des jeweiligen Sensors an die Steuerung weiter gegeben werden. Insbesondere liegt eine redundante Information über die Geberräder vor, wenn wie bevorzugt mindestens zwei Differenzsignale aus den Messsignalen ermittelt werden. Dann ist eine zusätzliche Plausibilisierung durch eine Phasenmessung von jeweils entsprechend zusammengehörigen Differenzsignalen zu dem ersten und dem zweiten Geberrad möglich.

Durch die Bereitstellung von wenigstens zwei Signalen bzw. Differenzsignalen pro Geberrad wird eine Erhöhung der Robustheit erreicht, da somit redundante Informationen mit zusätzlicher Plausibilisierungsmöglichkeit vorhanden sind.

In einer weiteren Ausführungsform wird in Schritt e) die Drehrichtung basierend auf den wenigstens zwei ersten Signalen oder den wenigstens zwei zweiten Signalen ermittelt.

Eines der wenigstens zwei Signale eilt dem anderen Signal nach. Dieses Nacheilen äußert sich in einer Phasenverschiebung. Aus der Phasenverschiebung lässt sich die Drehrichtung des Rotors mit nur einem der beiden Geberräder ermitteln. Das Signal zu einem Geberrad, das aus einem Sensorelement bzw. einer Sensorelementanordnung (Differenzsignal) stammt, das/die in Drehrichtung weiter vorne liegt, eilt einem Signal zu dem Geberrad, das aus einem Sensorelement bzw. einer Sensorelementanordnung (Differenzsignal) stammt, das/die in Drehrichtung weiter hinten liegt, voraus. Somit kann aus der Phasenverschiebung zwischen den Signalen zu einem Geberrad auf die Drehrichtung des Rotors geschlossen werden, ohne die Signale des anderen Geberrads mit betrachten zu müssen.

Durch die wenigstens zwei Signale, liegen redundante Informationen bezüglich der Drehrichtung von dem ersten Geberrad und dem zweiten Geberrad vor, sodass eine Plausibilisierung erfolgen kann, was die Robustheit erhöht.

In einer weiteren Ausführungsform erfolgt in Schritt d) ein Startwinkel basierend auf einem Testpulsverfahren oder einem Stromimpulsverfahren.

Sollte bereits zu Beginn der Drehung des Rotors eine initiale Absolutwinkelposition bekannt sein müssen, so kann auf das bekannte Testpulsverfahren oder Stromimpulsverfahren zurückgegriffen werden. Dabei werden Phasen einer elektrischen Maschine mit kleinen Testströmen beaufschlagt und Spulenimpedanzen gemessen. Aus diesen kann dann auf die Rotorlage (speziell bei PSM) geschlossen werden.

Hier auch beschrieben werden sollen ein Computerprogramm, das eingerichtet ist das zuvor beschriebene Verfahren auszuführen sowie ein maschinenlesbares Speichermedium, auf dem das zuvor beschriebene Computerprogramm gespeichert ist.

### Figurenbeschreibung

Das Verfahren und die Geberanordnung sowie das technische Umfeld werden nachfolgend anhand der Figuren beispielhaft näher erläutert. Es ist darauf hinzuweisen, dass die Figuren besonders bevorzugte Ausführungsvarianten der zeigen, das Verfahren und die Geberanordnung jedoch nicht darauf beschränkt sind. Es zeigen:
Fig. 1: eine schematische Darstellung einer Geberradanordnung zum Ermitteln einer Absolutwinkelposition und einer Drehrichtung eines Rotors;
Fig. 2A und 2B: eine schematische Darstellung eines ersten Geberrads und eines ersten Sensors;
Fig. 3: eine schematische Darstellung eines Hallsensors und eines Geberrads;
Fig. 4A und 4B: eine beispielhafte Darstellung von Signalverläufen bei entgegengesetzten Drehrichtungen;
Fig. 5: eine schematische abgerollte Draufsicht eines ersten Geberrads und eines zweiten Geberrads; und
Fig. 6: ein schematisches Ablaufdiagramm eines Verfahrens zum Ermitteln einer Absolutwinkelposition und einer Drehrichtung eines Rotors.

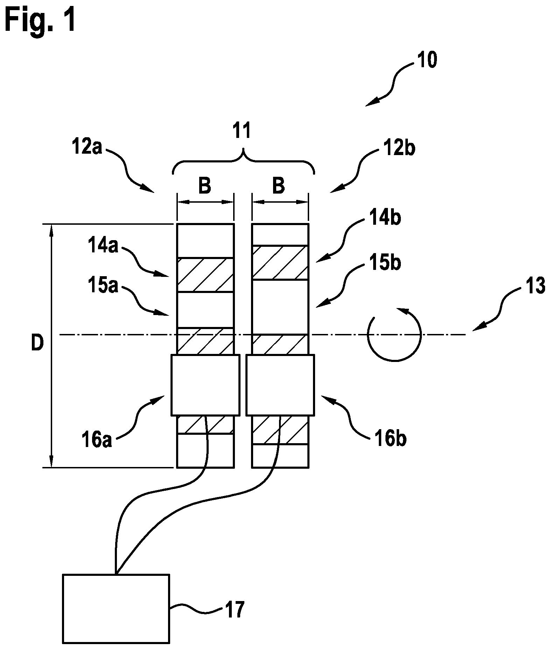

Fig. 1 zeigt schematisch eine Geberradanordnung 10 umfassend ein Doppelspurgeberrad 11, das ein erstes Geberrad 12a und ein zweites Geberrad 12b aufweist. Die Geberräder 12a, 12b sind drehbar um eine Achse 13 gelagert. Die Achse 13 durchstößt das Doppelspurgeberrad 11 bevorzugt in dessen Schwerpunkt und fällt vorteilhaft mit einer Drehachse einer elektrischen Maschine (nicht dargestellt) zusammen. Die Geberräder 12a, 12b weisen jeweils Zähne 14a bzw. Zähne 14b und Lücken 15a bzw. 15b auf. Die Zähne sind aus einem ferromagnetischen Material gefertigt. Die Geberräder 12a, 12b weisen gleiche axialen Abmessungen (Breite B) auf und besitzen gleiche Durchmesser D. Die Erfassung der Zähne 14a, 14b und Lücken 15a, 15b der Geberräder 12a, 12b erfolgt mit jeweils einem ersten Hallsensor 16a für das erste Geberrad 12a bzw. einem zweiten Hallsensor 16 b für das zweite Geberrad 12b. Die Hallsensoren 16a, 16b sind mit einer Steuerung 17 verbunden, die als integrierte Schaltung ausgeführt ist.

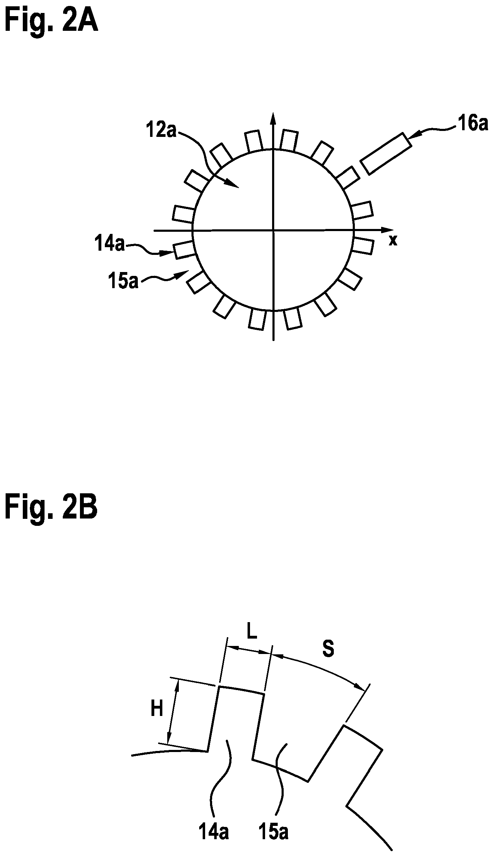

Fig. 2A stellt schematisch das erste Geberrad 12a mit den Zähnen 14a und den Lücken 15a dar. Die Zähne 14a sind entlang eines Umfangs des ersten Geberrads 12a gleichmäßig beabstandet angeordnet. Der erste Hallsensor 16a ist in einem gewissen Abstand zu dem ersten Geberrad 12a angeordnet, sodass er die vorbeiziehenden Zähne 14a von den Lücken 15a unterscheiden kann. Der zweite Hallsensor 16b ist in gleicher Weise an dem zweiten Geberrad 12b angeordnet, allerdings sind die Zähne 14b entlang eines Umfangs des zweiten Geberrads 12b nicht gleichmäßig beabstandet angeordnet (nicht in Fig. 2A dargestellt). Der erste Hallsensor 16a liefert bei der Abtastung des ersten Geberrads 12a ein erstes Signal an die Steuerung 17 und der zweite Hallsensor 16b liefert bei der Abtastung des zweiten Geberrads 12a ein zweites Signal an die Steuerung 17.

Fig. 2B stellt schematisch zwei Zähne 14a und eine Lücke 15a dar. Die Zähne 14a weisen alle eine gleiche Länge L und eine gleiche Höhe H auf. Da die Zähne 14a gleichmäßig beabstandet entlang des Umfangs des ersten Geberrads 12a angeordnet sind, besitzen die Lücken 15a alle eine gleiche Länge S. Die Länge S der Lücken 15a ist etwa 10% größer als die Länge L der Zähne 14a und beträgt 3,5 mm. Die Höhe H der Zähne 14a beträgt mindestens 3,5 mm, ist aber nach oben nicht begrenzt. Da die Zähne 14b nicht gleichmäßig beabstandet entlang des Umfangs des zweiten Geberrads 12b angeordnet sind, besitzen zwar die Zähne 14b die gleiche Länge L und die gleiche Höhe H wie die Zähne 14a, aber die Lücken 15b haben nicht eine gleiche Länge (nicht in Fig. 2B dargestellt). Durch eine gleichmäßige Geometrie der Zähne und einen ausreichenden Höhenunterschied zwischen den Zähnen und dem Lücken wird sichergestellt, dass die Hallsensoren 16a, 16b die Zähne sicher von den Lücken unterscheiden können und jeder Zahn ein genau definiertes Messsignal erzeugt.

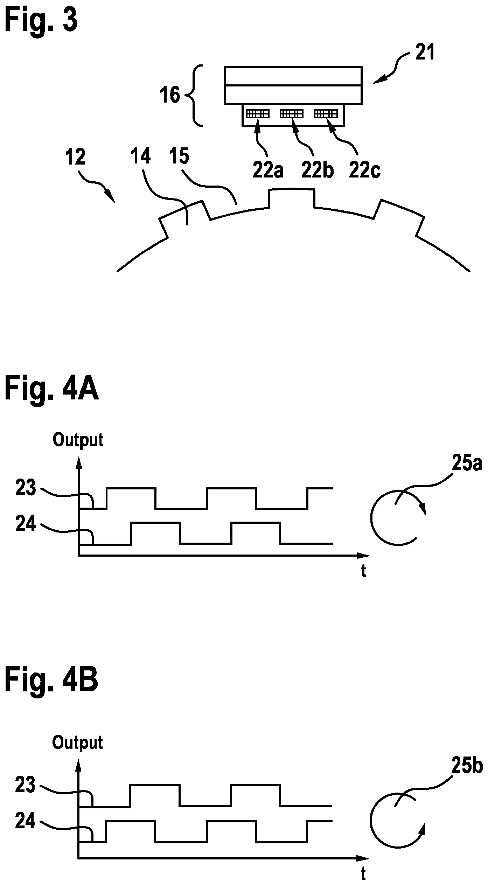

Fig. 4 zeigt schematisch einen Hallsensor 16 des ersten Geberrads 12a oder des zweiten Geberrads 12b. Der Hallsensor 16 umfasst einen Permanentmagnet (Backbias-Magnet) 21 und drei Hallelemente 22a-22c. Ein magnetischer Nordpol und ein magnetischer Südpol des Magneten 21 verlaufen im Wesentlichen tangential entlang einer Ebene, deren Normalenvektor senkrecht auf der Achse 13 (nicht in Fig. 3 dargestellt) steht. Die Hallelemente 22a-22c sind in einem gleichen radialen Abstand von der Achse 13 entfernt zwischen dem Permanentmagneten 21 und dem ersten Geberrad 12a bzw. dem zweiten Geberrad 12b sowie in einem gleichen Abstand hintereinander in einer tangentialen Richtung entlang des Umfangs des ersten Geberrads 12a bzw. des zweiten Geberrads 12b angeordnet. Ferner weisen die Hallelemente jeweils laterale Erstreckungen im Bereich weniger mm auf. Bevorzugt beträgt eine Breite zwischen einer vorderen Kante des Hallelements 22a und einer hinteren Kante des Hallelements 22c 1 mm bis 2 mm mehr als die Länge L eines Zahnes und besonders bevorzugt zwischen 4 mm und 8 mm.

Die Fig. 4A und 4B zeigen jeweils einen Signalverlauf eines Hallsensors 16 bei sich drehendem Geberrad 12. Es wird ein erstes Differenzsignal 23 von Hallspannungen der Hallelemente 22a und 22b in einem ersten Kanal und ein zweites Differenzsignal 24 von Hallspannungen der Hallelemente 22b und 22c in einem zweiten Kanal ausgegeben. Überschreitet jeweils die Differenz der Hallspannungen einen oberen Grenzwert, wird von einer nicht dargestellten in dem Hallsensor 16 integrierten Schaltung (z. B. ASIC) eine logische 0 ausgegeben. Unterschreitet die Differenz der Hallspannungen einen unteren Grenzwert, wechselt das entsprechende Differenzsignal 23, 24 auf eine logische 1. Aufgrund der Geometrie der Geberräder 12a, 12b, sind die Differenzsignale 23, 24 um 90° elektrisch phasenverschoben und erlauben eine Detektion der Drehrichtung. Es können auch andere Phasenverschiebungen auftreten. In Fig. 4A ist eine Drehrichtung 25a im Uhrzeigersinn dargestellt. Dabei passiert einer der Zähne 14 zunächst das vordere Hallelement 22a. Als nächstes wird das mittlere Hallelement 22b von dem Zahn 14 passiert. Sobald der Zahn 14 von den Hallelementen 22a und 22b detektiert wird, gibt das erste Differenzsignal 23 eine logische 1 aus, da die Differenz der Hallspannung des vorderen Hallelements 22a und des mittleren Hallelements 22b den unteren Grenzwert unterschreitet. Das zweite Differenzsignal 24 gibt dabei weiterhin eine logische 0 aus, da die Differenz der Hallspannungen des mittleren Hallelements 22b und des hinteren Hallelements 22c den oberen Grenzwert überschreitet. Sobald der Zahn 14 auch das hintere Hallelement 22c passiert, gibt das zweite Differenzsignal 24 eine logische 1 aus. Das erste Differenzsignal 23 eilt dem zweiten Differenzsignal 24 bei Drehung im Uhrzeigersinn voraus. In Fig. 4B ist eine Drehrichtung 25b gegen den Uhrzeigersinn dargestellt. Dabei wird zuerst das hintere Hallelement 22c, gefolgt von dem mittleren Hallelement 22b und schließlich das vordere Hallelement 22a von einem der Zähne 14 passiert. Daher gibt zunächst das zweite Differenzsignal 24 eine logische 1 aus, und das erste Differenzsignal 23 folgt dem zweiten Differenzsignal 24 phasenverschoben nach.

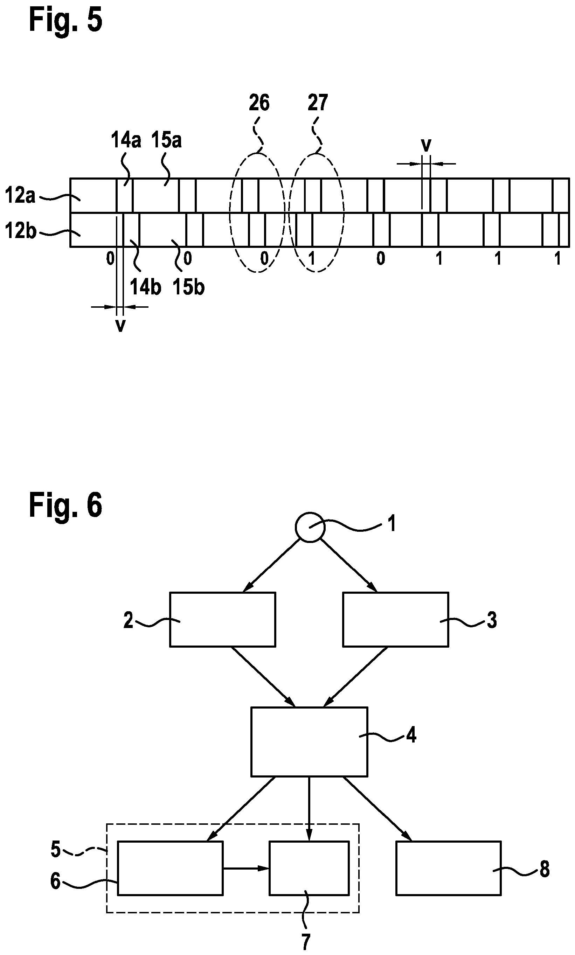

Die Geberradanordnung 10 umfasst das Doppelspurgeberrad 11 mit dem ersten Geberrad 12a und dem zweiten Geberrad 12b in Kombination mit dem ersten Hallsensor 16a und dem zweiten Hallsensor 16b, um die Absolutwinkelposition nach einer elektrischen Umdrehung ermitteln zu können. Dazu besitzt das erste Geberrad 12a eine regelmäßige Anordnung der Zähne 14a. D.h. die Länge L der Zähne 14a und die Länge der Lücken 15a sind für alle Zähne 14a und Lücken 15a identisch. Das zweite Geberrad 12b besitzt eine gleiche Anzahl n an Zähnen 14b wie das erste Geberrad 12a an Zähnen 14a. Allerdings sind die Zähne 14b auf dem zweiten Geberrad 12b bezogen auf einen willkürlich gewählten Umlaufsinn in eine positive oder eine negative Richtung gegenüber den Zähnen 14a auf dem ersten Geberrad 12a versetzt angeordnet. Eine entsprechende abgewickelte Draufsicht von Geberradspuren einer elektrischen Umdrehung der Geberräder 12a, 12b zeigt Fig. 5. Ein Winkelversatz V zwischen zwei Zähnen 12a, 12b auf dem ersten Geberrad 12a und dem zweiten Geberrad 12b beträgt konstant 35% der Länge L der Zähne 14a, 14b. Allerdings unterscheidet sich der Winkelversatz V der Zähne 14a, 14b im Vorzeichen.

Aus jeweils dem ersten Differenzsignal 23 und jeweils dem zweiten Differenzsignal 24 des ersten Hallsensors 12a und des zweiten Hallsensors 12b werden entsprechend ein erstes und ein zweites binäres Signal generiert. Bei den binären Signalen entspricht eine logische 1, dem Moment wenn einer der Zähne 14b des zweiten Geberrades 12b vor dem entsprechenden Zahn 14a des erstes Geberrades 12a detektiert wird. Umgekehrt entspricht eine logische 0 der binären Signale dem Moment wenn einer der Zähne 14b vor dem entsprechenden Zahn 14a detektiert wird. Die binären Signale werden direkt von der Steuerung 17 über eine Phasenmessung der beiden Differenzsignale 23, 24 ermittelt.

Es ergibt sich für jedes Zahnpaar, bestehend aus einem der Zähne 14a des ersten Geberrades 12a und dem entsprechenden Zahn 14b des zweiten Geberrades 12b, anhand ihres Winkelversatzes V ein binärer Wert, der anhand der beiden Differenzsignale 23 bzw. 24 der Hallsensoren 16a, 16b als binäres Signal ermittelt wird. Um die Absolutwinkelposition und die Drehrichtung aus einem oder beiden binären Signalen ermitteln zu können, liegt eine spezielle Anordnung (Kodierung) der Zähne 14a, 14b zueinander vor. Diese Anordnung ist ein asymmetrischer Winkelversatz in dem Sinne, dass eine Drehrichtung 25a im Uhrzeigersinn von einer Rückwärtsdrehung 25b gegen den Uhrzeigersinn diskriminiert werden kann. Bei acht Zähnen pro elektrische Umdrehung liegt der in Fig. 5 dargestellte asymmetrische Versatz der Zähne 14b zu den Zähnen 14a vor. Bei einer Drehrichtung 25b gegen den Uhrzeigersinn ergibt sich als binäres Signal nach einer elektrischen Umdrehung beispielsweise die (8bit-)Folge 0 0 0 10 111. Liegt eine Drehrichtung 25a mit dem Uhrzeigersinn vor, so lautet die (8bit-)Folge nach einer elektrischen Umdrehung 11101000. Es können also eindeutig die Drehrichtung sowie die Absolutwinkelposition ermittelt werden. Ist eine initiale Position des Doppelspurgeberrads 11 eine andere, ändert sich die (8bit-)Folge, jedoch können die (8bit-)Folgen bei einer Drehrichtung im Uhrzeigersinn 25a immer eindeutig von den (8bit-)Folgen einer Drehrichtung 25b gegen den Uhrzeigersinn unterschieden werden. Mit dem asymmetrischen Versatz der Zähne 14a, 14b zueinander wie in Fig. 5 dargestellt ergeben sich folgende (8bit-)Folgen:

| Initiale Position | Drehrichtung 25b (gegen den Uhrzeigersinn) | Drehrichtung 25a (im Uhrzeigersinn) |
|---|---|---|
| 0° | 00010111 | 11101000 |
| 45° | 00101110 | 11010001 |
| 90° | 01011100 | 10100011 |
| 135° | 10111000 | 01000111 |
| 180° | 01110001 | 10001110 |
| 225° | 11100010 | 00011101 |
| 270° | 11000101 | 00111010 |

| | | |
|---|---|---|
| 315° | 10001011 | 00111010 |

Mit einem Doppelspurgeberrad 11 mit n = 8 Zähnen pro Geberrad 12a, 12b lässt sich die Absolutwinkelposition des Rotors auf 45° genau ermitteln. Dazu wird aus der ersten (8bit-)Folge, die die asymmetrische Kodierung bzw. den asymmetrischen Winkelversatz der Zähne 14b zu den entsprechenden Zähnen 14a wiederspiegelt, ein Startwinkel bestimmt. zu diesem Startwinkel wird kontinuierlich ein Inkrementalwinkel von 45° addiert, sobald das binäre Signal den nächsten Wert (logische 0 oder 1) angibt.

Damit bereits zu Beginn einer Drehung des Rotors eine initiale Absolutwinkelposition ermittelt werden kann, wird auf das bekannte Testpulsverfahren oder das Stromimpulsverfahren zurückgegriffen. Dabei werden Phasen der elektrischen Maschine mit kleinen Testströmen beaufschlagt und Spulenimpedanzen gemessen. Aus diesen kann dann auf die initiale Absolutwinkelposition (speziell bei PSM) geschlossen werden.

Durch die beiden Differenzsignale 23, 24 liegen redundante Informationen vor. Daher ist eine zusätzliche Plausibilisierung der ermittelten Absolutwinkelposition durch eine Phasenmessung von jeweils zusammengehörigen ersten Differenzsignalen 23 und zweiten Differenzsignalen 24 möglich.

Fig. 6 zeigt ein Ablaufdiagramm eines Verfahrens zum Ermitteln einer Absolutwinkelposition und einer Drehrichtung eines Rotors. Nach einer optionalen Initialisierung 1 wird bei einem ersten Empfangen 2 kontinuierlich ein erstes Signal von dem ersten Sensor 16a und bei einem zweiten Empfangen 3 ein zweites Signal von dem zweiten Sensor 16b empfangen. Aus dem ersten und zweiten Signal, die jeweils ein oder mehrere Differenzsignale 23, 24 sein können, wird bei einem Ableiten 4 kontinuierlich das binäre Signal abgeleitet. Anschließend wird bei einem Ermitteln 5 der Absolutwinkelposition basierend auf dem binären Signal kontinuierlich die aktuelle Absolutwinkelposition ermittelt. Dabei wird bei einem Ermitteln 6 der Startwinkel nach der ersten elektrischen Umdrehung aus dem binären Signal durch Mustererkennung ermittelt und anschließend kontinuierlich bei einem Addieren 7 der Inkrementalwinkel kontinuierlich für jeden neuen Wert des binären Signals zu dem Startwinkel bzw. der vorhergehenden Absolutwinkelposition addiert. Der Startwinkel kann bei dem Ermitteln 6 alternativ auch durch ein Testpulsverfahren oder ein Stromimpulsverfahren ermittelt werden. Zudem wird bei einem Ermitteln 8 die Drehrichtung nach einer elektrischen Umdrehung aus dem binären Signal oder alternativ aus den zwei Differenzsignalen 23, 24 des ersten Sensors 12a oder des zweiten Sensors 12b ermittelt.

## Patentansprüche

1. Geberradanordnung (10) zum Ermitteln einer Absolutwinkelposition und einer Drehrichtung eines Rotors, umfassend:
- ein erstes Geberrad (12a), das drehfest mit dem Rotor verbunden ist, wobei das erste Geberrad (12a) entlang seines Umfangs eine Anzahl n an gleichmäßig beabstandet angeordneten Zähnen (14a) aufweist;
- ein zweites Geberrad (12b), das drehfest mit dem ersten Geberrad (12a) verbunden ist, wobei das zweite Geberrad (12b) entlang seines Umfangs die gleiche Anzahl n an Zähnen (14b) wie das erste Geberrad (12a) aufweist, wobei die Zähne (14b) des zweiten Geberrads (12b) einen asymmetrischen Winkelversatz zu den Zähnen (14a) des ersten Geberrads (12a) aufweisen;
- einen ersten Sensor (16a), der zu einem Abtasten des ersten Geberrads (12a) eingerichtet ist;
- einen zweiten Sensor (16b), der zu einem Abtasten des zweiten Geberrads (12b) eingerichtet ist;
- eine Steuerung (17), die mit dem ersten Sensor (12a) und dem zweiten Sensor (12b) kommunikativ verbunden ist, wobei die Steuerung zu einem Ermitteln der Absolutwinkelposition sowie einem Ermitteln der Drehrichtung basierend auf einem binären Signal eingerichtet ist, wobei das binäre Signal aus einem ersten Signal des ersten Sensors (12a) und einem zweiten Signal des zweiten Sensors (12b) abgeleitet ist.

2. Geberadabordnung (10) nach Anspruch 1, wobei die Zähne (14a) des ersten Geberrads (12a) oder die Zähne (14b) des zweiten Geberrads (12b) gleichförmig sind.

3. Geberradanordnung (10) nach einem der vorherigen Ansprüche, wobei der erste Sensor (16a) und der zweite Sensor (16b) jeweils wenigstens zwei Sensorelemente (22a, 22b, 22c) umfassen und wobei das erste Signal und das zweite Signal jeweils Differenzsignale (23, 24) aus Messsignalen der wenigstens zwei Sensorelemente (22a, 22b, 22c) des entsprechenden Sensors (16a, 16b) sind.

4. Geberradanordnung (10) nach einem der vorherigen Ansprüche, wobei der erste Sensor (16a) und der zweite Sensor (16b) zu einem Erzeugen von jeweils wenigstens zwei ersten Signalen und wenigstens zwei zweiten Signalen eingerichtet sind.

5. Geberradanordnung (10) nach Anspruch 4, wobei die Steuerung (17) zu einem Ermitteln der Drehrichtung basierend auf den wenigstens zwei ersten Signalen oder den wenigstens zwei zweiten Signalen eingerichtet ist.

6. Geberradanordnung (10) nach einem der vorherigen Ansprüche, wobei der erste Sensor (16a) oder der zweite Sensor (16b) ein Magnetfeldsensor, insbesondere ein Hallsensor ist und wobei entsprechend die Zähne (14a) des ersten Geberrads (12a) oder die Zähne (14b) des zweiten Geberrads (12b) ferromagnetisch sind.

7. Fahrzeug umfassend eine Geberradanordnung (10) gemäß einem der vorherigen Ansprüche.

8. Verfahren zum Ermitteln einer Absolutwinkelposition und einer Drehrichtung eines Rotors, umfassend die Schritte:
a) Empfangen (2) eines ersten Signals von einem ersten Sensor (16a), der ein erstes Geberrad (12a) abtastet, das drehfest mit dem Rotor verbunden ist, wobei das erste Geberrad (12a) entlang seines Umfangs eine Anzahl n an gleichmäßig beabstandet angeordneten Zähnen (14a) aufweist;
b) Empfangen (3) eines zweiten Signals von einem zweiten Sensor (16b), der ein zweites Geberrad (12b) abtastet, das drehfest mit dem ersten Geberrad (12a) verbunden ist, wobei das zweite Geberrad (12b) entlang seines Umfangs die gleiche Anzahl n an Zähnen (14b) wie das erste Geberrad (12a) aufweist, wobei die Zähne (14b) des zweiten Geberrads (12b) einen asymmetrischen Winkelversatz zu den Zähnen (14a) des ersten Geberrads (12a) aufweisen;
c) Ableiten (4) eines binären Signals aus dem ersten Signal und dem zweiten Signal;
d) Ermitteln (5) der Absolutwinkelposition basierend auf dem binären Signal; und
e) Ermitteln (8) der Drehrichtung basierend auf dem binären Signal.

9. Verfahren nach Anspruch 8, wobei das erste Signal und das zweite Signal jeweils Differenzsignale (23, 24) aus Messsignalen von wenigstens zwei Sensorelementen (22a, 22b, 22c) des entsprechenden Sensors (16a, 16b) sind.

10. Verfahren nach einem der Ansprüche 8 bis 9, wobei in Schritt a) und Schritt b) entsprechend wenigstens zwei erste Signale und wenigstens zwei zweite Signale empfangen werden.

11. Verfahren nach Anspruch 10, wobei in Schritt e) die Drehrichtung basierend auf den wenigstens zwei ersten Signalen oder den wenigstens zwei zweiten Signalen ermittelt wird.

12. Verfahren nach einem der Ansprüche 8 bis 11, wobei in Schritt d) ein Ermitteln (6) eines Startwinkels basierend auf einem Testpulsverfahren oder einem Stromimpulsverfahren erfolgt.

13. Computerprogramm, das eingerichtet ist das Verfahren nach einem der Ansprüche 8 bis 12 auszuführen.

14. Maschinenlesbares Speichermedium, auf dem das Computerprogramm nach Anspruch 13 gespeichert ist.

## Claims

1. Encoder arrangement (10) for determining an absolute angular position and a rotational direction of a rotor, comprising:
- a first encoder wheel (12a) that is connected non-rotatably to the rotor, wherein the first encoder wheel (12a) comprises a number n of evenly spaced teeth (14a) arranged along its circumference;
- a second encoder wheel (12b) that is connected non-rotatably to the first encoder wheel (12a), wherein the second encoder wheel (12b) comprises the same number n of teeth (14b) as the first encoder wheel (12a) along its circumference, wherein the teeth (14b) of the second encoder wheel (12b) have an asymmetric angular offset to the teeth (14a) of the first encoder wheel (12a);
- a first sensor (16a) that is designed to sense the first encoder wheel (12a);
- a second sensor (16b) that is designed to sense the second encoder wheel (12b);
- a controller (17) that is communicatively connected to the first sensor (12a) and to the second sensor (12b), wherein the controller is designed for a determination of the absolute angular position and for a determination of the rotational direction on the basis of a binary signal, wherein the binary signal is derived from a first signal of the first sensor (12a) and a second signal of the second sensor (12b).

2. Encoder arrangement (10) according to Claim 1, wherein the teeth (14a) of the first encoder wheel (12a) or the teeth (14b) of the second encoder wheel (12b) have the same shape.

3. Encoder arrangement (10) according to one of the preceding claims, wherein the first sensor (16a) and the second sensor (16b) each comprise at least two sensor elements (22a, 22b, 22c), and wherein the first signal and the second signal are each difference signals (23, 24) from measurement signals of the at least two sensor elements (22a, 22b, 22c) of the corresponding sensor (16a, 16b).

4. Encoder arrangement (10) according to one of the preceding claims, wherein the first sensor (16a) and the second sensor (16b) are designed to each generate at least two first signals and at least two second signals.

5. Encoder arrangement (10) according to Claim 4, wherein the controller (17) is designed for a determination of the rotational direction on the basis of the at least two first signals or of the at least two second signals.

6. Encoder arrangement (10) according to one of the preceding claims, wherein the first sensor (16a) or the second sensor (16b) is a magnetic field sensor, in particular a Hall sensor, and where accordingly the teeth (14a) of the first encoder wheel (12a) or the teeth (14b) of the second encoder wheel (12b) are ferromagnetic.

7. Vehicle comprising an encoder arrangement (10) according to one of the preceding claims.

8. Method for determining an absolute angular position and a rotational direction of a rotor, comprising the steps of:
a) receiving (2) a first signal from a first sensor (16a) that senses a first encoder wheel (12a) that is connected non-rotatably to the rotor, wherein the first encoder wheel (12a) comprises a number n of evenly spaced teeth (14a) arranged along its circumference;
b) receiving (3) a second signal from a second sensor (16b) that senses a second encoder wheel (12b) that is connected non-rotatably to the first encoder wheel (12a), wherein the second encoder wheel (12b) comprises the same number n of teeth (14b) as the first encoder wheel (12a) along its circumference, wherein the teeth (14b) of the second encoder wheel (12b) have an asymmetric angular offset to the teeth (14a) of the first encoder wheel (12a);
c) deriving (4) a binary signal from the first signal and the second signal;
d) determining (5) the absolute angular position on the basis of the binary signal; and
e) determining (8) the rotational direction on the basis of the binary signal.

9. Method according to Claim 8, wherein the first signal and the second signal are each difference signals (23, 24) from measurement signals from at least two sensor elements (22a, 22b, 22c) of the corresponding sensor (16a, 16b).

10. Method according to one of Claims 8 to 9, wherein at least two first signals and at least two second signals are accordingly received in step a) and step b).

11. Method according to Claim 10, wherein the rotational direction is determined in step e) on the basis of the at least two first signals or of the at least two second signals.

12. Method according to one of Claims 8 to 11, wherein a determination (6) of a starting angle is made on the basis of a test pulse method or a current pulse method in step d).

13. Computer program that is designed to carry out the method according to one of Claims 8 to 12.

14. Machine-readable storage medium on which the computer program according to Claim 13 is stored.

## Revendications

1. Dispositif de roue de détection (10) destiné à déterminer une position angulaire absolue et un sens de rotation d'un rotor, comprenant :
- une première roue de détection (12a) qui est reliée solidaire en rotation au rotor, dans lequel la première roue de détection (12a) comporte, le long de sa circonférence, un nombre n de dents régulièrement espacées (14a) ;
- une deuxième roue de détection (12b) qui est reliée solidaire en rotation à la première roue de détection (12a), dans lequel la deuxième roue de détection (12b) comporte, le long de sa circonférence, le même nombre n de dents (14b) que la première roue de détection (12a), dans lequel les dents (14b) de la deuxième roue de détection (12b) présentent un décalage angulaire asymétrique par rapport aux dents (14a) de la première roue de détection (12a) ;
- un premier capteur (16a) qui est conçu pour détecter la première roue de détection (12a) ;
- un deuxième capteur (16b) qui est conçu pour détecter la deuxième roue de détection (12b) ;
- une commande (17) qui est reliée de manière par voie de communication au premier capteur (12a) et au deuxième capteur (12b), dans lequel la commande est conçue pour déterminer la position angulaire absolue et pour déterminer le sens de rotation sur la base d'un signal binaire, dans lequel le signal binaire est dérivé d'un premier signal du premier capteur (12a) et d'un deuxième signal du deuxième capteur (12b).

2. Dispositif de roue de détection (10) selon la revendication 1, dans lequel les dents (14a) de la première roue de détection (12a) ou les dents (14b) de la deuxième roue de détection (12b) sont de formes identiques.

3. Dispositif de roue de détection (10) selon l'une des revendications précédentes, dans lequel le premier capteur (16a) et le deuxième capteur (16b) comprennent respectivement au moins deux éléments de détection (22a, 22b, 22c) et dans lequel le premier signal et le deuxième signal sont respectivement des signaux de différence (23, 24) issus des signaux de mesure desdits au moins deux éléments de détection (22a, 22b, 22c) du capteur correspondant (16a, 16b).

4. Dispositif de roue de détection (10) selon l'une des revendications précédentes, dans lequel le premier capteur (16a) et le deuxième capteur (16b) sont conçus pour générer respectivement au moins deux premiers signaux et au moins deux deuxièmes signaux.

5. Dispositif de roue de détection (10) selon la revendication 4, dans lequel la commande (17) est conçue pour déterminer le sens de rotation sur la base desdits au moins deux premiers signaux ou desdits au moins deux deuxièmes signaux.

6. Dispositif de roue de détection (10) selon l'une des revendications précédentes, dans lequel le premier capteur (16a) ou le deuxième capteur (16b) est un capteur de champ magnétique, en particulier un capteur à effet Hall, et dans lequel, de manière correspondante, les dents (14a) de la première roue de détection (12a) ou les dents (14b) de la deuxième roue de détection (12b) sont ferromagnétiques.

7. Véhicule comprenant un dispositif de roue de détection (10) selon l'une des revendications précédentes.

8. Procédé de détermination d'une position angulaire absolue et d'un sens de rotation d'un rotor, comprenant les étapes consistant à :
a) recevoir (2) un premier signal d'un premier capteur (16a) qui détecte une première roue de détection (12a) qui est reliée solidaire en rotation au rotor, dans lequel la première roue de détection (12a) comporte, le long de sa circonférence, un nombre n de dents régulièrement espacées (14a) ;
b) recevoir (3) un deuxième signal d'un deuxième capteur (16b) qui détecte une deuxième roue de détection (12b) qui est reliée solidaire en rotation à la première roue de détection (12a), dans lequel la deuxième roue de détection (12b) comporte, le long de sa circonférence, le même nombre n de dents (14b) que la première roue de détection (12a), dans lequel les dents (14b) de la deuxième roue de détection (12b) présentent un décalage angulaire asymétrique par rapport aux dents (14a) de la première roue de détection (12a) ;
c) dériver (4) un signal binaire à partir du premier signal et du deuxième signal ;
d) déterminer (5) la position angulaire absolue sur la base du signal binaire ; et
e) déterminer (8) le sens de rotation sur la base du signal binaire.

9. Procédé selon la revendication 8, dans lequel le premier signal et le deuxième signal sont respectivement des signaux de différence (23, 24) issus des signaux de mesure d'au moins deux éléments de détection (22a, 22b, 22c) du capteur correspondant (16a, 16b).

10. Procédé selon l'une des revendications 8 à 9, dans lequel à l'étape a) et à l'étape b), au moins deux premiers signaux et au moins deux deuxièmes signaux sont reçus de manière correspondante.

11. Procédé selon la revendication 10, dans lequel, à l'étape e), le sens de rotation est déterminé sur la base desdits au moins deux premiers signaux ou desdits au moins deux deuxièmes signaux.

12. Procédé selon l'une des revendications 8 à 11, dans lequel, à l'étape d), une détermination (6) d'un angle de départ est effectuée sur la base d'un procédé par impulsion de test ou d'un procédé par impulsion de courant.

13. Programme informatique qui est conçu pour mettre en œuvre le procédé selon l'une des revendications 8 à 12.

14. Support de stockage lisible par machine sur lequel est stocké le programme informatique selon la revendication 13.
